(19) Europäisches Patentamt
European Patent Office
Office européen des brevets

(11) **EP 0 895 609 B1**

(12) **FASCICULE DE BREVET EUROPEEN**

(45) Date de publication et mention de la délivrance du brevet:
**18.07.2007 Bulletin 2007/29**

(21) Numéro de dépôt: **98904215.5**

(22) Date de dépôt: **26.01.1998**

(51) Int Cl.:
***G02C 7/02*** *(2006.01)*    ***B41M 5/24*** *(2006.01)*

(86) Numéro de dépôt international:
**PCT/FR1998/000130**

(87) Numéro de publication internationale:
**WO 1998/033088 (30.07.1998 Gazette 1998/30)**

(54) **PROCEDE POUR LE MARQUAGE D'UN OBJET EN MATIERE SYNTHETIQUE TRANSLUCIDE, EN PARTICULIER LENTILLE OPHTALMIQUE, AINSI QUE OBJET MARQUE ET METHODE D'IDENTIFICATION D'UN TEL OBJET**

VERFAHREN ZUM MARKIEREN EINES OBJEKTS AUS DURCHSICHTIGEM SYNTHETISCHEM MATERIAL,INSBESONDERE EINER OPTHALMISCHEN LINSE, MARKIERTES OBJEKT UND METHODE ZUR IDENTIFIKATION EINES SOLCHEN OBJEKTS

METHOD FOR MARKING AN OBJECT MADE OF TRANSLUCENT SYNTHETIC MATERIAL, IN PARTICULAR AN OPHTHALMIC LENS, MARKED OBJECT AND CORRESPONDING METHOD OF IDENTIFICATION OF SUCH AN OBJECT

(84) Etats contractants désignés:
**DE ES FR GB IE IT**

(30) Priorité: **28.01.1997 FR 9700873**

(43) Date de publication de la demande:
**10.02.1999 Bulletin 1999/06**

(73) Titulaire: **ESSILOR INTERNATIONAL (Compagnie Générale d'Optique)**
**F-94220 Charenton-le-Pont (FR)**

(72) Inventeurs:
• **DARMES, Daniel**
  **F-77340 Pontault-Combault (FR)**

• **LEFEBVRE, Gilles**
  **F-94430 Chennevières sur Marne (FR)**
• **MAZE, Sylvie**
  **F-94230 Cachan (FR)**
• **FREON, Eric**
  **F-75020 Paris (FR)**
• **BELL, Francis**
  **F-94200 Ivry sur Seine (FR)**

(74) Mandataire: **Santarelli**
**14, avenue de la Grande Armée,**
**B.P. 237**
**75822 Paris Cedex 17 (FR)**

(56) Documents cités:
**DE-A- 19 608 937        DE-C- 3 728 622**
**FR-A- 2 621 529        US-A- 4 194 814**

## Description

La présente invention concerne d'une manière générale le marquage d'un quelconque objet en matière synthétique translucide, c'est-à-dire l'application d'un symbole à cet objet en vue de son identification et/ou de son suivi.

Ce symbole peut comporter, par exemple, un numéro de série, une référence, ou une quelconque autre inscription relative aux caractéristiques de l'objet concerné, au processus de traitement qu'il a subi ou à celui qu'il est appelé à subir.

La présente invention vise plus particulièrement, mais non nécessairement exclusivement, le cas où cet objet est une lentille ophtalmique.

Pour assurer l'identification et/ou le suivi, ou la "traçabilité", d'une lentille ophtalmique, qu'il s'agisse d'une lentille ophtalmique en verre minéral ou qu'il s'agisse d'une lentille ophtalmique en matière organique communément dite synthétique, et ainsi permettre d'en relever à tout instant par simple lecture les caractéristiques, il est en effet nécessaire de l'affecter d'un symbole comportant, sous forme codée ou non, toutes les informations souhaitées.

S'agissant d'une lentille ophtalmique en verre minéral, ou, d'une manière plus générale, d'un quelconque objet en un tel verre, tel que par exemple les coquilles de moulage mises en oeuvre pour le moulage de lentilles ophtalmiques en matière synthétique, il a été proposé de procéder par gravure, et, plus particulièrement, par gravure au laser.

C'est le cas, par exemple, dans la demande de brevet français qui, déposée le 11 avril 1995 sous le No 95 04314, a été publiée sous le No 2 732 917.

Dans cette demande de brevet français, il est plus précisément proposé de faire interférer le faisceau d'un laser YAG avec une couche d'un matériau particulier, en l'espèce un cément capable de réaction avec le verre, dûment appliqué au préalable en surface à cet effet sur l'objet à traiter.

Cette disposition a pour avantage d'associer à la gravure obtenue une coloration qui, en renforçant le contraste de cette gravure, facilite et rend plus précise la lecture ultérieure du symbole ainsi réalisé.

S'agissant du marquage d'objets en verre minéral, elle donne donc satisfaction.

Mais, s'ils sont acceptables pour des objets en verre minéral susceptibles de resservir plusieurs fois, comme cela est le cas des coquilles de moulage destinées à assurer le moulage de lentilles ophtalmiques en matière synthétique, les frais inhérents à la mise en oeuvre d'un tel cément le sont moins pour des objets en matière synthétique à destination définitive, comme cela est le cas de ces mêmes lentilles ophtalmiques, car ils en grèvent alors inutilement le coût.

Un tel cément n'est d'ailleurs dans ce cas pas nécessaire, un choix adéquat de sa longueur d'onde permettant au faisceau du laser de réagir directement avec une telle matière synthétique.

La présente invention a d'une manière générale pour objet une disposition permettant avantageusement d'obtenir, pour le symbole réalisé, un contraste suffisant pour que, malgré l'absence de cément, une lecture ultérieure de ce symbole puisse se faire de manière fiable et sûre.

De manière plus précise, elle a tout d'abord pour objet un objet en matière synthétique translucide, et, notamment, une lentille ophtalmique en une telle matière, étant entendu que cette matière est alors non seulement translucide mais encore transparente et que l'objet concerné peut être nu, verni, ou revêtu d'un quelconque matériau, et, par exemple, d'un matériau anti-reflet.

L'objet suivant l'invention comporte localement au moins un symbole et est d'une manière générale caractérisé en ce que ce symbole comporte au moins une cellule de gravure, qui se présente sous la forme d'un puits, et qui comporte, en relief sur le fond de ce puits, au moins une saillie.

Il s'avère, en effet, et les essais le confirment, que, avec une telle saillie, chaque cellule de gravure apparaît à la lecture comme une zone suffisamment sombre pour être dûment identifiée comme étant effectivement une cellule de gravure.

La raison en est sans doute, sans que cela soit cependant une certitude, que cette saillie conduit à une diffusion et/ou à une réfraction locale de la lumière permettant, par contraste avec une cellule non gravée, l'identification recherchée, et constatée, d'une cellule de gravure en tant que telle.

La présente invention a encore pour objet un procédé de marquage pour l'obtention d'un tel objet en matière synthétique translucide, dans lequel, la gravure étant assurée de manière connue à l'aide d'un laser, on réalise chaque cellule de gravure en exécutant à l'aide de ce laser au moins deux tirs décalés l'un par rapport à l'autre.

En effet, et les essais le confirment également, le décalage entre ces tirs permet de manière très simple l'obtention de la saillie recherchée.

Du fait de ce décalage, les tirs effectués s'apparentent d'ailleurs à un balayage, dont l'amplitude, réduite, conditionne la largeur finalement obtenue pour la cellule de gravure ainsi formée.

Dans la pratique, trois tirs au laser, conduisant à la formation de deux saillies pour chaque cellule de gravure, constituent, suivant l'invention, un bon compromis entre l'obtention d'une bonne rapidité d'exécution pour le symbole recherché et celle d'une définition de lecture ultérieure suffisante pour celui-ci.

Les essais montrent que la lecture ultérieure de ce symbole peut avantageusement se faire de manière fiable et sûre, même après l'application à un tel objet d'une couche d'un quelconque matériau transparent et de faible épaisseur, tel que par exemple un vernis ou un matériau anti-reflet.

La présente invention vise encore un procédé d'identification et/ou de suivi d'un tel objet, dans lequel l'étape de lecture du symbole de cet objet est effectuée avec un lecteur de symbole permettant de manière simple cette lecture.

Ce lecteur de symbole comporte une caméra CCD et un dispositif d'éclairage apte à générer un faisceau dont la dimension transversale est comprise entre une fois et trois fois celle du symbole à lire, l'objet étant interposé, au niveau de son symbole, entre la caméra CCD et le dispositif d'éclairage.

Ce dispositif d'éclairage comporte plusieurs sources d'éclairage générant chacune un tel faisceau et placées suivant une ligne disposée transversalement par rapport à l'axe optique de l'ensemble.

Aucune calibration ni réglage supplémentaire n'est nécessaire.

Les objets de l'invention, leurs caractéristiques et leurs avantages ressortiront d'ailleurs de la description qui va suivre, à titre d'exemple, en référence aux dessins schématiques annexés sur lesquels :

la figure 1 est une vue en élévation-coupe illustrant le marquage, suivant l'invention, d'un objet en matière synthétique translucide ;

la figure 2 est, à échelle supérieure, et suivant la flèche II de la figure 1, une vue partielle en plan de cet objet, au niveau du symbole qu'il comporte à l'issue de ce marquage ;

la figure 3 reprend, à échelle encore supérieure, le détail de la figure 2 repéré par un encart III sur cette figure 2 ;

la figure 4 est, à échelle encore supérieure, une vue partielle en coupe de l'objet ainsi marqué, suivant la ligne IV-IV de la figure 3 ;

la figure 5 est, à la manière de la figure 1, une vue en élévation-coupe d'un lecteur de symbole d'un objet suivant l'invention ;

la figure 6 est un exemple de gravure mesurée au moyen d'un rugosimètre.

Ces figures illustrent, à titre d'exemple, le cas où l'objet 10 à marquer est une lentille ophtalmique, et, plus précisément, une lentille ophtalmique brute, c'est-à-dire un palet de contour circulaire à détourer pour son montage sur une monture de lunettes.

Cet objet 10 comporte donc deux faces principales 11A, 11B, l'une concave, l'autre convexe, et une tranche 12, en pratique droite.

S'il s'agit d'une lentille ophtalmique correctrice, l'une au moins des faces principales 11A, 11B est sphérique, asphérique, torique, progressive ou multifocale.

Le plus souvent, il s'agit de la face convexe 11 B, destinée à en former la face avant.

Quoi qu'il en soit, l'objet 10 à marquer, qui peut être nu, verni ou revêtu d'un quelconque matériau, tel que par exemple un matériau anti-reflet, est en matière synthétique translucide, et, plus précisément, s'agissant d'une lentille ophtalmique, en matière synthétique transparente.

Cette matière synthétique peut par exemple être constituée par toute matière synthétique utilisable pour la fabrication d'une lentille ophtalmique, comme, par exemple, celles vendues sous les désignations commerciales "ORMA" et "ORMEX" ou celles décrites dans le brevet français No 2 699 541.

Comme exposé précédemment, il s'agit d'appliquer localement au moins un symbole 13 à l'objet 10, pour son identification et/ou pour son suivi.

Dans la forme de mise en oeuvre représentée, seul un symbole 1 3 est prévu.

Préférentiellement, mais non nécessairement exclusivement, ce symbole 13 est appliqué à la face principale 11 A concave de l'objet 10, au voisinage de la tranche 12 de celui-ci, dans une partie de cet objet 10 qui sera éliminée lors de son détourage et/ou lors de son surfaçage.

De manière connue en soi, pour la réalisation du symbole 1 3, on assure une gravure par cellules de l'objet 10.

Autrement dit, le symbole 13 comporte au moins une cellule de gravure 14, et, en pratique, est fait d'une pluralité de cellules de gravure 14, qui, présentes en creux à la surface de l'objet 10, alternent, isolément ou par groupe, avec des cellules non gravées 15 restées lisses sur cet objet 10.

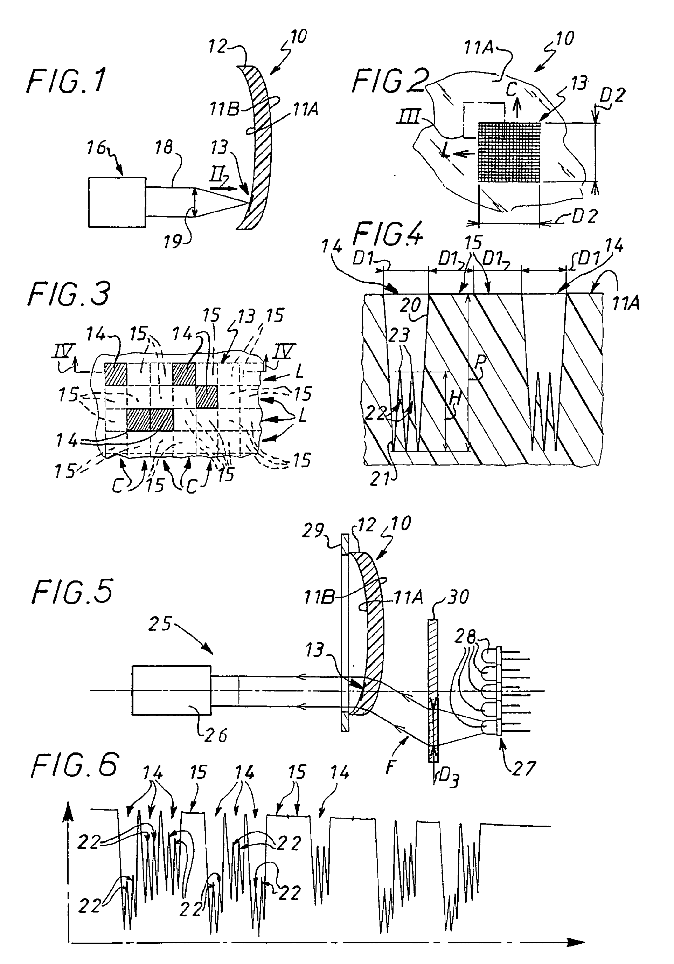

Pour une meilleure individualisation par rapport aux cellules non gravées 15, les cellules de gravure 14 ont été hachurées en grisé sur la figure 3.

En outre, pour des commodités de tracé, il a été supposé, sur cette figure 3, que ces cellules de gravure 14 avaient, en plan, un contour carré.

Mais il va de soi que ce contour peut être différent, et, par exemple, être rectangulaire.

Quoi qu'il en soit, les cellules de gravure 14 ont, préférentiellement, toutes un même contour, et cela est le cas dans la forme de mise en oeuvre représentée.

Corollairement, les cellules non gravées 15 sont supposées avoir elles-mêmes toutes un même contour, et celui-ci est supposé être le même que celui des cellules de gravure 14.

Dans la forme de mise en oeuvre représentée, et de manière connue en soi, les cellules de gravure 14 sont réparties en lignes L et en colonnes C, suivant un symbole de type matriciel.

De manière connue en soi, enfin, et tel que schématisé sur la figure 1, la gravure nécessaire au marquage de l'objet 10 est assurée à l'aide d'un laser 1 6 dont le faisceau 18 est focalisé ou défocalisé de manière ponctuelle sur la face principale 11 A de cet objet 10 au moyen d'une tête galvanométrique 19 permettant à la demande d'en varier la déviation suivant le tracé du symbole 13 à obtenir.

Les dispositions correspondantes sont bien connues par elles-mêmes, et ne relevant pas de la présente invention, elles ne seront pas décrites ici.

Il suffira d'indiquer que, en pratique, le laser 16 est, par exemple, un laser de type CO2, de longueur d'onde égale à 10 $\mu$m, et que, dûment piloté par un calculateur, il fonctionne préférentiellement en continu, son faisceau étant interrompu sur commande au moyen d'un obturateur électromagnétique.

Suivant l'invention, on fait en sorte que, se présentant sous la forme d'un puits 20, tel que schématisé sur la figure 4, chaque cellule de gravure 14 ait, en relief, sur le fond 21 de ce puits 20, au moins une saillie 22.

Préférentiellement, mais non nécessairement obligatoirement, l'amplitude maximale H de cette saillie 22 à compter du fond 21 du puits 20 est une fraction de la profondeur P de ce puits 20 comprise entre le cinquième de cette profondeur P et cette profondeur P, la profondeur P étant mesurée, elle, à compter de la face principale 11 A concernée de l'objet 10.

Autrement dit

$$\frac{P}{5} < H < P$$

Préférentiellement, également, mais également non nécessairement obligatoirement, l'amplitude maximale H de la ou des saillies 22 en relief sur le fond 21 du puits 20 est au moins égale à deux cinquièmes de la profondeur P de celui-ci.

Préférentiellement, enfin, mais également non nécessairement obligatoirement, les puits 20 formés par les diverses cellules de gravure 14 ont sensiblement une même profondeur P.

Dans la forme de mise en oeuvre représentée, chacun des puits 20 formant les cellules de gravure 14 comporte en relief sur son fond 21 deux saillies 22 décalées l'une par rapport à l'autre.

Ces deux saillies 22 ont sensiblement la même amplitude maximale H.

Préférentiellement, et tel que représenté, mais non nécessairement obligatoirement, les saillies 22 sont en forme de pic.

Autrement dit, de forme générale en coin, elles vont en s'amincissant du fond 21 du puits 20 à leur sommet 23, et celui-ci est en forme d'arête.

Au niveau de leur sommet 23, et ainsi qu'il est matérialisé sur la figure 4, les saillies 22 partagent transversalement le volume interne du puits 20 en trois parties sensiblement égales.

Suivant l'invention, pour l'obtention de saillies 22 sur le fond 21 du puits 20 que forme chaque cellule de gravure 14, on réalise cette cellule de gravure 14 en exécutant, à l'aide du laser 16, au moins deux tirs décalés l'un par rapport à l'autre.

Ainsi qu'il est aisé de le comprendre, deux de tels tirs donnent naissance à une saillie 22.

Dans le cas où, comme représenté, deux saillies 22 font saillie sur le fond 21 du puits 20 que forme chaque cellule de gravure 14, on réalise donc une telle cellule de gravure 14 en exécutant à l'aide du laser 16 trois tirs successivement décalés les uns par rapport aux autres.

Préférentiellement, pour des cellules de gravure 14 alignées, on exécute autant de balayages de la ligne L correspondante qu'il y a de tirs à effectuer à l'aide du laser 16, et, d'un balayage à l'autre, ces tirs sont décalés d'une même quantité pour chacune des cellules de gravure 14 à réaliser.

Comme déjà précédemment indiqué, chaque cellule de gravure 14 résulte elle-même d'un certain balayage, qui, d'amplitude réduite, résulte du décalage des tirs qui lui donnent naissance.

Soit $D_1$ la dimension transversale que présente en surface chaque cellule de gravure 14, et, donc, chaque cellule non gravée 15.

Préférentiellement, cette dimension transversale $D_1$ est au moins égale à 0,1 mm.

Par exemple, elle est de l'ordre de 0,35 mm.

Si, dans ces conditions, le symbole 13 comporte, à titre d'exemple, un nombre de lignes L compris entre quinze et vingt-cinq, et un nombre égal de colonnes C, ce nombre étant par exemple de l'ordre de dix-neuf, la dimension transversale $D_2$ de ce symbole 13 est globalement comprise entre 1,5 et 25 $\mu$m en étant par exemple voisine de 6 $\mu$m.

Pour la lecture ultérieure de ce symbole 13, il peut être procédé à l'aide d'un lecteur de symbole 25 du type de celui représenté à la figure 5.

Suivant l'invention, ce lecteur de symbole 25 comporte, globalement, d'une part, une caméra CCD 26, et, d'autre part, un dispositif d'éclairage 27 apte à générer au moins un faisceau F dont la dimension transversale $D_3$ est comprise entre une fois et cinq fois celle $D_2$ du symbole 13 à lire, ce qui est favorable à l'obtention d'un bon contraste.

Dans la forme de réalisation représentée, le dispositif d'éclairage 27 comporte, à titre d'exemple non limitatif, une ou plusieurs sources d'éclairage 28, en l'espèce plusieurs, générant chacune un faisceau F et placées suivant une ligne disposée transversalement par rapport à l'axe optique de l'ensemble.

La caméra CCD 26 étant bien connue par elle-même, et ne relevant pas de la présente invention, elle ne sera pas décrite ici.

Il suffira d'indiquer qu'il s'agit d'un dispositif à charges couplées comportant en réseau une pluralité de cellules réceptrices.

Quant aux sources d'éclairage 28, il peut s'agir, par exemple, de diodes électroluminescentes.

Par exemple, et tel que représenté, cinq sources d'éclairage 28 peuvent ainsi être prévues, en étant régulièrement réparties de part et d'autre de l'axe optique de l'ensemble.

Dans la forme de réalisation représentée, entre la caméra CCD 26 et le dispositif d'éclairage 27 interviennent, d'une part, un plan d'appui 29, contre lequel l'objet 10 doit être appliqué, et qui peut par exemple être constitué par une platine ajourée, comme représenté, et, d'autre part, entre ce plan d'appui 29 et le dispositif d'éclairage 27, un dépoli 30.

En pratique, c'est au niveau de ce dépoli 30 que la dimension transversale $D_3$ d'un faisceau F du dispositif d'éclairage 27 est appréciée.

En service, les sources d'éclairage 28 sont allumées les unes après les autres.

La source d'éclairage 28 centrale, qui est implantée suivant l'axe optique de l'ensemble, permet d'éclairer l'objet 10 dans une zone de celui-ci qui ne génère pas d'effet prismatique.

Corollairement, les sources d'éclairage 28 les plus éloignées de l'axe de la caméra CCD 26 permettent de compenser plus ou moins la déviation prismatique que peut provoquer l'objet 10 au niveau de son symbole 13.

A chaque fois, le halo de lumière projeté sur le dépoli 30 par une telle source d'éclairage 28 agit comme une source diffusante.

Lors de la lecture de ce symbole 13, et comme déjà mentionné ci-dessus, les cellules de gravure 14 ressortent en sombre de manière très contrastée par rapport aux cellules non gravées 1 5.

Cette lecture est donc particulièrement fiable et sûre.

Le diagramme de la figure 6 correspond, lui, à une lecture faite au moyen d'un rugosimètre, suivant une colonne C du symbole 13.

Les saillies 22 y apparaissent clairement.

Il s'agit bien plus que d'une simple rugosité de surface.

Des résultats particulièrement satisfaisants ont été obtenus avec des symboles 13 dont chaque cellule de gravure 14 forme un puits 20 de profondeur P au moins égale à 25 $\mu$m, avec une amplitude maximale H de la ou des saillies 22 présentes sur le fond 21 de ce puits 20 comprise entre 5 et 25 $\mu$m.

Bien entendu, les valeurs numériques précisées dans ce qui précède n'ont été données qu'à titre d'exemple, sans qu'il puisse en résulter une quelconque limitation pour la présente invention.

D'une manière plus générale, la présente invention ne se limite pas aux formes de réalisation et de mise en oeuvre décrites et représentées, mais englobe toute variante d'exécution.

S'agissant, en particulier, du lecteur de symbole, d'autres formes de réalisation sont en effet envisageables pour le dispositif d'éclairage à mettre en oeuvre.

Par exemple, celui-ci peut être réalisé à partir de fibres optiques ou d'une source de lumière étendue devant laquelle se déplace un diaphragme.

### Revendications

**1.** Objet en matière synthétique translucide comportant localement au moins un symbole (13), **caractérisé en ce que** ce symbole (13) comporte au moins une cellule de gravure (14), qui se présente sous la forme d'un puits (20), et qui comporte, en relief sur le fond (21) de ce puits (20), au moins une saillie (22).

**2.** Objet suivant la revendication 1, **caractérisé en ce que** l'amplitude maximale (H) de la saillie (22) en relief sur le fond (21) du puits (20) que forme une cellule de gravure (14) est une fraction de la profondeur (P) de ce puits (20) comprise entre le cinquième de cette profondeur (P) et cette profondeur (P).

**3.** Objet suivant l'une quelconque des revendications 1, 2, **caractérisé en ce que** la profondeur (P) du puits (20) que forme une cellule de gravure (14) est au moins égale à 25 $\mu$m, et l'amplitude maximale (H) de la saillie (22) en relief sur le fond (21) de ce puits (20) est comprise entre 5 et 25 $\mu$m.

**4.** Objet suivant l'une quelconque des revendications 1 à 3, **caractérisé en ce que** la saillie (22) en relief sur le fond (21) du puits (20) que forme une cellule de gravure (14) est en forme de coin.

**5.** Objet suivant l'une quelconque des revendications 1 à 4, **caractérisé en ce que** le puits (20) que forme une cellule de gravure (14) comporte en relief sur son fond (21) deux saillies (22) décalées l'une par rapport à l'autre.

**6.** Objet suivant la revendication 5, **caractérisé en ce que** les saillies (22) ont sensiblement la même amplitude maximale (H).

**7.** Objet suivant l'une quelconque des revendications 5, 6, **caractérisé en ce que**, au niveau de leur sommet (23), les deux saillies (22) partagent transversalement le volume interne du puits (20) en trois parties sensiblement égales.

**8.** Objet suivant l'une quelconque des revendications 1 à 7, **caractérisé en ce que**, en surface, la dimension transversale ($D_1$) d'une cellule de gravure (14) est au moins égale à 0,1 mm.

**9.** Objet suivant la revendication 8, **caractérisé en ce que**, en surface, la dimension transversale ($D_1$) d'une cellule de gravure (14) est de l'ordre de 0,35 mm.

**10.** Objet suivant l'une quelconque des revendications 1 à 9, **caractérisé en ce que** son symbole (13) comporte une pluralité de cellules de gravure (14) réparties en lignes (L) et colonnes (C).

**11.** Procédé de marquage pour l'obtention d'un objet en matière synthétique translucide suivant l'une quelconque des revendications 1 à 10, **caractérisé en ce que**, assurant une gravure par cellules de cet objet (10), on fait en sorte que, se présentant sous la forme d'un puits (20), chaque cellule de gravure (14) ait, en relief sur le fond (21) de ce puits (20), au moins une saillie (22), et **en ce que**, la gravure étant assurée à l'aide d'un laser (16), on réalise chaque cellule de gravure (14) en exécutant à l'aide de ce laser (16) au moins deux tirs décalés l'un par rapport à l'autre.

**12.** Procédé suivant la revendication 11, **caractérisé en ce que** on réalise chaque cellule de gravure (14) en exécutant à l'aide du laser (16) trois tirs successivement décalés les uns par rapport aux autres.

**13.** Procédé suivant l'une quelconque des revendications 11, 12, **caractérisé en ce que**, pour des cellules de gravure (14) alignées, on exécute autant de balayages de la ligne (L) correspondante qu'il y a de tirs à effectuer à l'aide du laser (16), et, d'un balayage à l'autre, ces tirs sont décalés d'une même quantité pour chacune des cellules de gravure (14) à réaliser.

**14.** Procédé suivant l'une quelconque des revendications 11 à 13, **caractérisé en ce que** on répartit les cellules de gravure (14) en lignes (L) et colonnes (C) suivant un symbole de type matriciel.

**15.** Procédé d'identification et/ou de suivi d'un objet suivant l'une quelconque des revendications 1 à 10, **caractérisée en ce qu'**il comporte une étape de lecture du symbole (13) dudit objet avec un lecteur de symbole (25) comportant une caméra CCD (26) et un dispositif d'éclairage (27) comportant plusieurs sources d'éclairage (28) générant chacune un faisceau (F) et placées suivant une ligne disposée transversalement par rapport à l'axe optique de l'ensemble, chaque dit faisceau (F) ayant sa dimension transversale (D3) comprise entre une fois et cinq fois celle (D2) du symbole (13) à lire, ledit objet étant interposé, au niveau de son symbole (13), entre la caméra CCD (26) et le dispositif d'éclairage (27).

**16.** Procédé suivant la revendication 15, **caractérisée en ce que** les sources d'éclairage (28) sont des diodes électroluminescentes.

**17.** Procédé suivant l'une quelconque des revendications 15, 16, **caractérisée en ce que**, entre la caméra CCD (26) et le dispositif d'éclairage (27), intervient un plan d'appui (29).

**18.** Procédé suivant l'une quelconque des revendications 15 à 17, **caractérisée en ce que**, entre la caméra CCD (26) et le dispositif d'éclairage (27), intervient un dépoli (30).

**19.** Procédé suivant les revendications 17 et 18, prises conjointement, **caractérisée en ce que** le dépoli (30) intervient entre le plan d'appui (29) et le dispositif d'éclairage (27).

## Claims

**1.** A synthetic material object including at least one localised symbol (13) **characterised in that** said symbol (13) includes at least one etched cell (14) in the form of a well (20) having at least one projection (22) upstanding from the bottom (21) of said well (20).

**2.** An object according to claim 1 **characterised in that** the maximal amplitude (H) of the projection (22) upstanding on the bottom (21) of the well (20) formed by an etched cell (14) is a fraction of the depth (P) of the well (20) having a value between a value equal to one fifth of this depth (P) and a value equal to this depth (P).

**3.** An object according to claim 1 or claim 2 **characterised in that** the depth (P) of the well (20) formed by an etched cell (14) is at least equal to 25 $\mu$m and the maximal amplitude (H) of the projection (22) upstanding on the bottom (21) of said well (20) is in the range 5 $\mu$m to 25 $\mu$m.

**4.** An object according to any one of claims 1 to 3 **characterised in that** the projection (22) upstanding on the bottom (21) of the well (20) formed by an etched cell (14) is wedge-shaped.

**5.** An object according to any one of claims 1 to 4 **characterised in that** the well (20) formed by an etched cell (14) has two projections (22) upstanding on its bottom (21) and offset from each other.

**6.** An object according to claim 5 **characterised in that** the projections (22) have substantially the same maximal amplitude (H).

**7.** An object according to claim 5 or claim 6 **characterised in that**, at their apex (23), the two projections (22) divide the internal volume of the well (20) transversely into three substantially equal parts.

**8.** An object according to any one of claims 1 to 7 **characterised in that** the transverse dimension ($D_1$) of an etched cell (14) at the surface is at least equal 0.1 mm.

**9.** An object according to claim 8 **characterised in that** the transverse dimension ($D_1$) of an etched cell (14) at the surface is in the order of 0.35 mm.

**10.** An object according to any one of claims 1 to 9 **char-**

**acterised in that** the symbol (13) includes a plurality of etched cells (14) laid out in lines (L) and columns (C).

11. A method of marking a translucent synthetic material object according to any of claims 1 to 10 **characterised in that** said object (10) is etched in the form of cells and each etched cell (14) is in the form of a well (20) and has at least one projection (22) upstanding on the bottom (21) of said well (20), and **in that** the etching is effected by means of a laser (16) and each etched cell (14) is made by executing with said laser (16) at least two shots offset relative to each other.

12. A method according to claim 11 **characterised in that** each etched cell (14) is formed by executing by means of the laser (16) three successive shots offset relative to each other.

13. A method according to claim 11 or claim 12 **characterised in that**, for aligned etched cells (14), the corresponding line (L) is scanned as many times as there are shots to be effected by means of the laser (16) and the shots are offset from one scan to the next by the same amount for each of the etched cells (14) to be made.

14. A method according to any one of claims 11 to 13 **characterised in that** the etched cells (14) are laid out in lines (L) and columns (C) constituting a matrix type symbol.

15. A method of identifying and/or tracking an object according to any of claims 1 to 10 **characterised in that** it includes a step of reading the symbol (13) on said object with a symbol reader (25) comprising CCD camera (26) and an illuminating device (27) including several light sources (28) each generating a beam (F) and placed along a line disposed transversely to the overall optical axis, the transverse dimension $(D_3)$ of each of said beams (F) being between one and five times that (D2) of the symbol (13) to be read, the symbol (13) on said object being interposed between the CCD camera (26) and the illuminating device (27).

16. A method according to claim 15 **characterised in that** the light sources (28) are light-emitting diodes.

17. A method according to any one of claims 15 and 16 **characterised in that** there is a support plane (29) between the CCD camera (26) and the illuminating device (27).

18. A method according to any one of claims 15 to 17 **characterised in that** there is a frosted glass (30) between the CCD camera (26) and the illuminating device (27).

19. A method according to claim 17 in conjunction with claim 18 **characterised in that** the frosted glass (30) is between the support plane (29) and the illuminating device (27).


**Patentansprüche**

1. Gegenstand aus lichtdurchlässigem synthetischem Material, umfassend lokal zumindest ein Symbol (13), **dadurch gekennzeichnet, dass** dieses Symbol (13) zumindest eine Gravurzelle (14) umfasst, die sich in Form eines Schachtes (20) darstellt und die zumindest einen Vorsprung (22) im Relief am Boden (21) dieses Schachts (20) umfasst.

2. Gegenstand nach Anspruch 1, **dadurch gekennzeichnet, dass** die maximale Amplitude (H) des Vorsprungs (22) im Relief am Boden (21) des Schachts (20), der eine Gravurzelle (14) ausbildet, ein Bruchteil der Tiefe (P) des Schachts (20) ist, welche im Bereich von einem fünftel dieser Tiefe (P) und dieser Tiefe (P) liegt.

3. Gegenstand nach einem der Ansprüche 1, 2, **dadurch gekennzeichnet, dass** die Tiefe (P) des Schachts (20), der eine Gravurzelle (14) ausbildet, zumindest gleich 25 $\mu$m ist und die maximale Amplitude (H) des Vorsprungs (22) im Relief am Boden (21) dieses Schachts (20) im Bereich von 5 und 25 $\mu$m liegt.

4. Gegenstand nach einem der Ansprüche 1 bis 3, **dadurch gekennzeichnet, dass** der Vorsprung (22) im Relief am Boden (21) des Schachts (20), welcher eine Gravurzelle (14) ausbildet, keilförmig ist.

5. Gegenstand nach einem der Ansprüche 1 bis 4, **dadurch gekennzeichnet, dass** der Schacht (20), der eine Gravurzelle (14) ausbildet, im Relief an seinem Boden (21) zwei voneinander beabstandete Vorsprünge (22) umfasst.

6. Gegenstand nach Anspruch 5, **dadurch gekennzeichnet, dass** die Vorsprünge (22) im Wesentlichen die gleiche maximale Amplitude (H) haben.

7. Gegenstand nach einem der Ansprüche 5, 6, **dadurch gekennzeichnet, dass** die zwei Vorsprünge (22) in dem Bereich ihrer Spitze (23) das innere Volumen des Schachts (20) transversal in drei im Wesentlichen gleiche Teile teilt.

8. Gegenstand nach einem der Ansprüche 1 bis 7, **dadurch gekennzeichnet, dass** an der Oberfläche die transversale Dimension $(D_1)$ einer Gravurzelle (14) zumindest gleich 0,1 mm ist.

**9.** Gegenstand nach Anspruch 8, **dadurch gekennzeichnet, dass** an der Oberfläche die transversale Dimension ($D_1$) einer Gravurzelle (14) von der Größenordnung 0,35 mm ist.

**10.** Gegenstand nach einem der Ansprüche 1 bis 9, **dadurch gekennzeichnet, dass** sein Symbol (13) eine Vielzahl von Gravurzellen (14), verteilt auf Zeilen (L) und Spalten (C), umfasst.

**11.** Markierverfahren zum Erhalten eines Gegenstands aus lichtdurchlässigem synthetischen Material nach einem der Ansprüche 1 bis 10, **dadurch gekennzeichnet, dass** um eine zellenweise Gravur dieses Gegenstands (10) zu gewährleisten, jede Gravurzelle (14), welche sich in Form eines Schachts (20) darstellt, so gemacht wird, dass sie im Relief am Boden (21) dieses Schachts (20) zumindest einen Vorsprung (22) hat, und dass, um die Gravur mit Hilfe eines Lasers (16) zu gewährleisten, jede Gravurzelle (14) realisiert wird, indem mit Hilfe dieses Lasers (16) zumindest zwei voneinander beabstandete Beschüsse ausgeführt werden.

**12.** Verfahren nach Anspruch 11, **dadurch gekennzeichnet, dass** jeder Gravurzelle (14) realisiert wird, indem mit Hilfe des Lasers (16) drei Beschüsse nacheinander beabstandet voneinander ausgeführt werden.

**13.** Verfahren nach einem der Ansprüche 11, 12, **dadurch gekennzeichnet, dass** für jede der ausgerichteten Gravurzellen (14) so viele Abtastungen der entsprechenden Zeile (L) durchgeführt werden, wie Beschüsse mit Hilfe des Lasers (16) auszuführen sind und von einer Abtastung zur anderen diese Beschüsse für jede der zu realisierenden Gravurzellen (14) um die gleiche Quantität versetzt sind.

**14.** Verfahren nach einem der Ansprüche 11 bis 13, **dadurch gekennzeichnet, dass** die Gravurzellen (14) in Zeilen (L) uns Spalten (C) gemäß einem matrizenartigen Symbol verteilt sind.

**15.** Verfahren zur Identifikation und/oder Verfolgung eines Gegenstands gemäß einem der Ansprüche 1 bis 10, **dadurch gekennzeichnet, dass** es umfasst, einen Schritt des Lesens des Symbols (13) des Gegenstands mit einem Symbolleser (25) umfassend eine CCD Kamera (26) und eine Beleuchtungsvorrichtung (27), welche mehrere Lichtquellen (28) umfasst, die jeweils einen Strahl (F) generieren und entlang einer quer zur optischen Achse des Ensembles angeordneten Zeile platziert sind, wobei jeder Strahl (F) in seiner transversalen Dimension (D3) im Bereich von ein- bis fünfmal derer (D2) des zu lesenden Symbols (13) ist, wobei der Gegenstand in dem Bereich seines Symbols (13), zwischen die CCD Kamera (26) und die Beleuchtungsvorrichtung (27) gesetzt ist.

**16.** Verfahren nach Anspruch 15, **dadurch gekennzeichnet, dass** die Lichtquellen (28) elektrolumineszente Dioden sind.

**17.** Verfahren nach einem der Ansprüche 15, 16, **dadurch gekennzeichnet, dass** zwischen die CCD Kamera (26) und die Beleuchtungsvorrichtung (27) eine Anlagefläche (29) gebracht ist

**18.** Verfahren nach einem der Ansprüche 15 bis 17, **dadurch gekennzeichnet, dass** zwischen die CCD Kamera (26) und die Beleuchtungsvorrichtung (27) eine Mattscheibe (30) gebracht ist.

**19.** Verfahren nach den zusammengenommenen Ansprüchen 17 und 18, **dadurch gekennzeichnet, dass** die Mattscheibe (30) zwischen die Anlagefläche (29) und die Beleuchtungsvorrichtung (27) gebracht ist.

EP 0 895 609 B1

FIG.1

FIG.2

FIG.3

FIG.4

FIG.5

FIG.6

9

**RÉFÉRENCES CITÉES DANS LA DESCRIPTION**

**Documents brevets cités dans la description**

- FR 9504314
- FR 2699541